# EUROPÄISCHE PATENTSCHRIFT

(11) **EP 2 624 232 B1**
(45) Veröffentlichungstag und Bekanntmachung des Hinweises auf die Patenterteilung: **14.05.2014**
(21) Anmeldenummer: 12184051.6
(22) Anmeldetag: 12.09.2012
(51) Int. Cl.: G08G 1/015, G08G 1/017, G08G 1/054, G08G 1/00, G07B 15/06

(54) **Verfahren zur Kontrolle in einem Straßenmautsystem**
Method for controlling a road toll system
Procédé de contrôle dans un système de péage routier

(30) Priorität: 02.02.2012 EP 12153628
(43) Veröffentlichungstag der Anmeldung: 07.08.2013
(73) Patentinhaber: Kapsch TrafficCom AG, 1120 Wien (AT)
(72) Erfinder: Gärtner, Andreas, 1130 Wien (AT); Bäck, Joachim, 1160 Wien (AT); Nagy, Oliver, 1190 Wien (AT)
(74) Vertreter: Weiser, Andreas

(56) Entgegenhaltungen:
- EP-A2- 1 170 702
- EP-A2- 1 783 692
- WO-A1-2004/027730
- WO-A1-2011/129800
- DE-A1-102005 058 033
- US-A1- 2006 064 345

## Beschreibung

Diese Anmeldung beansprucht die Priorität der Europäischen Patentanmeldung Nr. 12153628.8 vom 2. Februar 2012, welche hier durch Bezugnahme aufgenommen wird.

Die vorliegende Erfindung betrifft ein Verfahren zur Kontrolle in einem Straßenmautsystem, das auf von Fahrzeugen mitgeführten Onboard-Units basiert.

In modernen Straßenmautsystemen werden mautpflichtige Fahrzeuge mit Onboard-Units (OBUs) ausgestattet, mit deren Hilfe die Fahrzeuge verortet und in der Folge ihre Straßennutzungen vermautet (vergebührt) werden können. Die OBUs können von verschiedenster Art sein: Einerseits können die OBUs von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale des Straßenmautsystems melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs ihre Ortsmeldungen oder Mauttransaktionen einfach speichern oder daraus berechnete Gebühren von einem internen Mautguthaben abbuchen. Anderseits können die OBUs von "fremd-verortetem" Typ sein, beispielsweise mit Hilfe einer Vielzahl geographisch über das Straßenmautsystem verteilter Maut- bzw. Funkbaken, welche jeweils Kurzreichweiten- bzw. DSRC-Funkkommunikationen (dedicated short range communications) mit passierenden OBUs aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs oder den Mautbaken erzeugt und entweder in den OBUs oder in der Zentrale verarbeitet werden.

In dem Dokument WO2004/027730 wird beispielweise solche Kontrollsystem beschrieben.

Die Erfindung setzt sich zum Ziel, neuartige Kontrollverfahren zur Feststellung und Ahndung (Enforcement) von Verkehrs- oder Mautdelikten in solchen Straßenmautsystemen zu schaffen. Die Erfindung setzt sich insbesondere zum Ziel, solche Kontrollverfahren für den Einsatz in geografisch abgelegenen Gebieten tauglich zu machen, welche keine oder nur eine unzureichende Mobilfunknetzabdeckung haben, sodass zumindest teilweise auf Satellitenverbindungen zurückgegriffen werden muss. Satellitenverbindungen haben hohe Latenzen, welche bei paketvermittelten Datenübertragungen zu Deadlock-Situationen führen können, wenn wegen verzögerter Empfangsbestätigungen der Sender den Verlust eines Datenpakets annimmt und dieses nochmals neu sendet; ein ständiges Neusenden kann die Folge sein, welches die Datenübertragung bis zum Erliegen bringt.

Dieses Ziel wird in einem ersten Aspekt der Erfindung mit einem Verfahren zur Kontrolle in einem Straßenmautsystem erreicht, das auf von Fahrzeugen mitgeführten Onboard-Units basiert, unter Verwendung zumindest eines Aufzeichnungsfahrzeugs und zumindest eines Kontrollfahrzeug, die drahtlos mit einem zentralen Deliktserver kommunizieren können, umfassend:
im Aufzeichnungsfahrzeug:
   - Detektieren eines Verkehrs- oder Mautdelikts einer Onboard-Unit oder eines diese mitführenden Fahrzeugs und, im Deliktfall,
   - Senden eines Deliktdatensatzes mit einem ermittelten Deliktort und einem gelesenen Kennzeichen des Fahrzeugs an den Deliktserver;
im Deliktserver:
   - Registrieren von Kontrollfahrzeugen mit Positionen oder deren Umgebungen,
   - Empfangen von Deliktdatensätzen von Aufzeichnungsfahrzeugen und, wenn deren Deliktorte in die Umgebung um eine Position fallen,
   - Bereitstellen dieser Deliktdatensätze einem mit dieser Position bzw. Umgebung registrierten Kontrollfahrzeug;
im Kontrollfahrzeug:
   - Registrieren seiner Position oder Umgebung im Deliktserver,
   - Kennzeichenlesen einer Kennzeichentafel eines passierenden Fahrzeugs,
   - Ermitteln, zu einem gelesenen Kennzeichen, eines vom Deliktserver bereitgestellten Deliktdatensatzes und, wenn ein solcher vorhanden,
   - Ausgeben einer Alarmmeldung,
wobei beim Senden eines Deliktdatensatzes vom Aufzeichnungsfahrzeug an den Deliktserver und/oder vom Deliktserver an das Kontrollfahrzeug der Deliktdatensatz in zwei Teile aufgeteilt wird, von denen der erste Teil zumindest den Deliktort und das Kennzeichenleseergebnis und der zweite Teil weitere Deliktdaten enthält und der erste Teil über ein verbindungsorientiertes und der zweite Teil über ein verbindungsloses paketvermitteltes Transportprotokoll gesendet wird.

In weiteren Aspekten schafft die Erfindung Kontrollvorrichtungen, Aufzeichnungsfahrzeuge, Deliktserver und Kontrollfahrzeuge, welche das erfindungsgemäße Verfahren implementieren.

Die Erfindung beruht auf dem neuartigen Ansatz eines verteilten Kontrollsystems, welches sich aus einer ersten Flotte von Aufzeichnungsfahrzeugen ("Jägern") und einer zweiten Flotte von Kontrollfahrzeugen ("Sammlern") zusammensetzt, die über einen gemeinsamen Deliktserver miteinander kommunizieren. Die "Jäger" sind gut ausgerüstet zur automatischen Delikterkennung und brauchen für Deliktfahrzeuge keine weiteren Veranlassungen zu treffen als die Erzeugung von Deliktdatensätzen; ihre Interaktionen mit den kontrollierten Fahrzeugen sind kurz, sie können sich dadurch schnell bewegen, auch Fahrzeuge mit hoher Geschwindigkeit oder im Gegenverkehr kontrollieren und gering in ihrer Anzahl gehalten werden, was die Gesamtausrüstungskosten in Grenzen hält. Die "Sammler" benötigen vergleichsweise geringe Ausrüstung, da sie keine Delikte feststellen, sondern lediglich Fahrzeugkennzeichen lesen, zugehörige Deliktdatensätze suchen und bei Deliktfahrzeugen Alarm geben. Die Besatzung des Kontrollfahrzeugs kann dann z.B. eine Anhaltung des Deliktfahrzeugs und eine manuelle Kontrolle vor Ort durchführen. Aufgrund ihrer geringen Ausrüstungserfordernisse können Kontrollfahrzeuge (Sammler) in großer Zahl vorgesehen werden und dadurch im einzelnen auch zeitaufwendige Vor-Ort-Kontrollen durchführen. Beispielsweise können bestehende Flotten von Spezialfahrzeugen wie Einsatzfahrzeuge, öffentliche Verkehrsmittel, Taxis usw. zu Kontrollfahrzeugen umgerüstet werden und ihre Kontrollfunktionen mobil im fließenden und stationär im ruhenden Verkehr ausüben, während einige wenige komplexe Aufzeichnungsfahrzeuge (Jäger) sich ständig hochmobil im Fließverkehr bewegen und Deliktdatensätze generieren. Im Ergebnis können automatische Kontrollen von Onboard-Units selbst in großräumigen, weit verzweigten und mit Hochgeschwindigkeits- und Gegenverkehrsstrecken versehenen Straßennetzen durchgeführt werden.

Durch die erfindungsgemäße Aufteilung des Deliktdatensatzes beim Senden desselben ist das Verfahren für hochlatente Drahtlosverbindungen zwischen Deliktserver, Aufzeichnungs- und Kontrollfahrzeugen geeignet, insbesondere für Satellitenübertragungen: Der erste, für das Aufgreifen von Deliktfahrzeugen kritische Datenteil mit dem Deliktort und dem Kennzeichenleseergebnis ist sehr kurz, meist weniger als 100 Byte groß, und kann daher rasch und zuverlässig über ein verbindungsorientiertes Transportprotokoll übertragen werden. Der zweite, die restlichen Daten des Deliktdatensatzes enthaltende Datenteil kann ein großes Datenvolumen haben, insbesondere wenn er Bilder zu Beweiszwecken enthält, und durch Aufteilung in kleine Datenpakete, die über ein verbindungsloses, unbestätigtes Transportprotokoll übertragen werden, auch in hochlatenten Übertragungsnetzen wie Satellitenkommunikationssystemen befördert werden.

An dieser Stelle sei erwähnt, dass die kombinierte Verwendung von verbindungsorientierten und verbindungslosen Datenpaketübertragungen an sich aus der JP 2000207298 A bekannt ist.

Bevorzugt werden die Pakete des zweiten Teils durchnumeriert, nach Empfang einer Mehrzahl von Paketen diese anhand ihrer Nummerierung auf Vollständigkeit überprüft und fehlende Pakete nachangefordert.

Besonders günstig ist es, wenn die weiteren Daten im zweiten Teil eine dem Kennzeichenleseergebnis zugrundeliegende Bildaufnahme der Kennzeichentafel des Fahrzeugs enthalten. Die Bildaufnahme kann später für Verkehrsvergehens-Ahndungszwecke (Enforcement) herangezogen werden, ist jedoch unkritisch für das Aufgreifen von Deliktfahrzeugen, welches auf Kennzeichenleseergebnissen und Deliktorten basiert. Aus diesem Grund kann die Bildaufnahme effizient über verbindungslose Datenpakete nachgesendet werden, auch in Satellitennetzen hoher Latenz.

Das Verfahren der Erfindung ist sowohl für (DSRC-)OBUs vom fremd-verorteten Typ geeignet, die bereits eine DSRC-Funkschnittstelle haben, als auch für (GNSS-)OBUs vom selbst-verortenden Typ, welche zusätzlich eine DSRC-Funkschnittstelle für Kontroll- und Einstellungszwecke haben.

Bevorzugt werden wesentlich mehr Kontrollfahrzeuge vorgesehen als Aufzeichnungsfahrzeuge, insbesondere bevorzugt um mindestens eine Zehnerpotenz mehr.

Die vom Aufzeichnungsfahrzeug detektierten Delikte können alle Arten von Maut- oder Verkehrsdelikten sein, welche automatisch detektierbar sind, beispielsweise Geschwindigkeitsübertretungen detektiert mit Hilfe einer Geschwindigkeitsmesseinrichtung des Aufzeichnungsfahrzeugs, Fahrverbote (auch zeitbezogene) detektiert mit Hilfe einer Fahrzeugdetektionseinrichtung des Aufzeichnungsfahrzeugs, usw. Bevorzugt sind die Delikte Mautdelikte, und insbesondere bevorzugt solche, die anhand eines aus der Onboard-Unit über die DSRC-Funkschnittstelle auslesbaren Mautparameters festgestellt werden können: Solche Mautparameter können beliebiger Art sein und z.B. über Einsatzzweck des Fahrzeugs (z.B. Einsatzfahrzeug, öffentliches Verkehrsmittel, Privatfahrzeug, Lastkraftwagen usw.), Status des Benutzers des Fahrzeugs, über Größe, Gewicht, Schadstoffklasse, Anzahl der Achsen des Fahrzeugs oder die Beziehung zwischen (nutzerspezifischer) Onboard-Unit und physischem Fahrzeug (z.B. über die Nummerntafeln referenziert) usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter der OBU zurückgegriffen, um die Höhe der Maut - oder überhaupt die Mautpflicht - zu ermitteln.

Eine bevorzugte Ausführungsform der Erfindung zeichnet sich demgemäß dadurch aus, dass das Detektieren im Aufzeichnungsfahrzeug durch Auslesen zumindest eines Mautparameters aus der Onboard-Unit über die DSRC-Funkschnittstelle und Überprüfen des Mautparameters auf Korrektheit erfolgt.

In noch einem weiteren Aspekt befasst sich die Erfindung speziell mit der Kontrolle fahrzeugformspezifischer Mautparameter: Solche fahrzeugformspezifische Parameter, welche die Höhe einer zu entrichtenden Straßenmaut bestimmen, können beispielsweise die Abmessungen des Fahrzeugs, seine aktuelle Achsanzahl (mit oder ohne Anhänger), eine bestimmte Karosserieform wie LKW oder PKW usw. sein und als Mautparameter in einer Onboard-Unit eingestellt oder gespeichert sein. Um missbräuchliche Fehleinstellungen solcher Mautparameter zu detektieren, weist das Aufzeichnungsfahrzeug einen DSRC-Sendeempfänger zum Auslesen des Mautparameters eines passierenden Fahrzeugs und einen Sensor zum Erfassen eines Formparameters des Fahrzeugs auf, wobei das Aufzeichnungsfahrzeug dafür ausgebildet ist, den Mautparameter auf Konsistenz mit dem Formparameter zu prüfen und bei Inkonsistenz den Deliktdatensatz mit Deliktort und Kennzeichenleseergebnis des Fahrzeugs an den Deliktserver zu senden.

Eine besonders bevorzugte Variante dieser Ausführungsform besteht darin, dass die genannten weiteren Daten im zweiten Datenteil eine dem erfassten Formparameter zugrundeliegende Bildaufnahme des Fahrzeugs enthalten. Auch diese Bildaufnahme kann für Enforcement-Zwecke als Beweismittel verwendet werden und ist wichtig, jedoch für das Aufgreifen der Deliktfahrzeuge zeitunkritisch; sie kann deshalb in dem zweiten Datenteil über verbindungslose Datenpakete versandt werden, welche auch für hochlatente Satellitenübertragungen geeignet sind.

Besonders günstig ist es, wenn das verbindungsorientierte Transportprotokoll TCP (transmission control protocol) und das verbindungslose Transportprotokoll UDP (user datagram protocol) ist.

Bevorzugt haben die Pakete des ersten Teils eine Größe von nicht mehr als 100 Byte. Dadurch sind sie so kurz, dass sie in verbindungsorientierten Protokollen wie TCP noch jeweils ungeteilt, d.h. als ein Paket, versandt werden können; die Gefahr eines Deadlock wegen ständiger Wiederholung von Handshaking-Blöcken bei hochlatenten Übertragungskanälen wie Satellitenverbindungen ist dadurch gering.

Wie erörtert ist das erfindungsgemäße Verfahren besonders für den Betrieb mit Satellitenkommunikationssystemen geeignet und das genannte Senden erfolgt demgemäß bevorzugt über eine Satellitenverbindung.

Alternativ oder zusätzlich kann das Aufzeichnungsfahrzeug mit einer Einrichtung zur Messung von Geschwindigkeit und bevorzugt Fahrtrichtung eines passierenden Fahrzeugs ausgestattet sein, um das Verkehrs- oder Mautdelikt auch auf Grundlage dieser Messwerte zu bestimmen.

Wie erörtert können der erfasste Formparameter und der ausgelesene Mautparameter bevorzugt Fahrzeuglänge oder Achsanzahl sein, insbesondere nach Klassen unterteilt ("klassifiziert"). Der Formparameter eines zu kontrollierenden Fahrzeugs kann dabei auf verschiedenste Arten erfasst werden, beispielsweise mit Hilfe einer elektronischen Kamera mit Objekterkennungssoftware, mit Hilfe eines Radardetektors zur Fahrzeugvermessung oder Detektion seiner Räder, oder bevorzugt mit Hilfe eines Laserentfernungsmessers oder Laserscanners, welcher zumindest einen Teil der Form des Fahrzeugs durch Abtasten während der Passage erfasst: Durch die Relativbewegung zwischen Aufzeichnungsfahrzeug und kontrolliertem Fahrzeug kann ein 2D- oder 3D-Abbild (Profil oder "Punktewolke" von Laserentfernungsmesspunkten) zumindest eines Teils des Fahrzeugs erstellt und daraus der Formparameter gewonnen werden, z.B. durch Objekterkennungssoftware, beispielsweise als Fahrzeuglänge oder Achsanzahl, woraus z.B. auf eine bestimmte Fahrzeugklasse (PKW, LKW, LKW mit Anhänger, usw.) geschlossen werden kann.

Das Aufzeichnungsfahrzeug kann den Deliktort selbst bestimmen, z.B. mittels eines Satellitennavigationsempfängers, oder von der kontrollierten Onboard-Unit selbst empfangen, z.B. wenn diese eine eigene Positionsbestimmungseinrichtung aufweist oder ihren Ort auf andere Weise, z.B. von einer ortsfesten Funkbake, erfährt.

Besonders günstig ist es, wenn das Aufzeichnungsfahrzeug mit einer Einrichtung zur Messung von Geschwindigkeit und bevorzugt Fahrtrichtung eines passierenden Fahrzeugs ausgestattet ist und diese Messwerte in den Deliktdatensatz aufnimmt. Der Deliktserver kann in diesem Fall auch dafür ausgebildet sein, aus den genannten Messwerten eine zeitliche Veränderung des Deliktorts zu extrapolieren, um diese bei der Überprüfung, ob ein Deliktort in die Umgebung einer Position zu einem Zeitpunkt fällt, zu berücksichtigen. Dadurch kann die Aufgriffswahrscheinlichkeit eines Deliktfahrzeugs durch ein Kontrollfahrzeug erhöht werden, indem Schätzungen der Bewegungen der Deliktfahrzeuge erzeugt und mit den Positionen der Kontrollfahrzeuge abgestimmt werden.

Gemäß einem weiteren Merkmal der Erfindung kann der Deliktdatensatz auch einen Zeitstempel enthalten und der Deliktserver dafür ausgebildet sein, nur Deliktdatensätze innerhalb eines vorgegebenen Zeitraums zu berücksichtigen. Alternativ oder zusätzlich kann das Kontrollfahrzeug dafür ausgebildet sein, Deliktdatensätze mit einem außerhalb eines vorgegebenen Zeitbereichs liegenden Zeitstempel zu verwerfen. Dadurch können alte Deliktdatensätze automatisch ausgeschieden werden.

Weitere Merkmale und Vorteile der Erfindung ergeben sich aus der nachfolgenden Beschreibung eines bevorzugten Ausführungsbeispiels, welches auf die begleitenden Zeichnungen Bezug nimmt, in denen zeigen:
Fig. 1 die Funktionsweise der Kontrollvorrichtungen und des Kontrollverfahrens der Erfindung in einer Fahrzeugpopulation eines Straßennetzes schematisch im Überblick;
die Fig. 2a und 2b verschiedene Vorrichtungskomponenten und Verfahrensschritte bei der Passage eines zu kontrollierenden Fahrzeugs an einem Aufzeichnungsfahrzeug;
die Fig. 3a und 3b verschiedene Vorrichtungskomponenten und Verfahrensschritte bei der Passage eines zu kontrollierenden Fahrzeugs an einem Kontrollfahrzeug;
Fig. 4 ein Flussdiagramm des im Aufzeichnungsfahrzeug ablaufenden Verfahrensteils;
Fig. 5 ein Flussdiagramm der im Deliktserver und im Kontrollfahrzeug ablaufenden Verfahrensteile; und
Fig. 6 die Aufteilung des Deliktdatensatzes bei der Versendung über eine Satellitenverbindung.

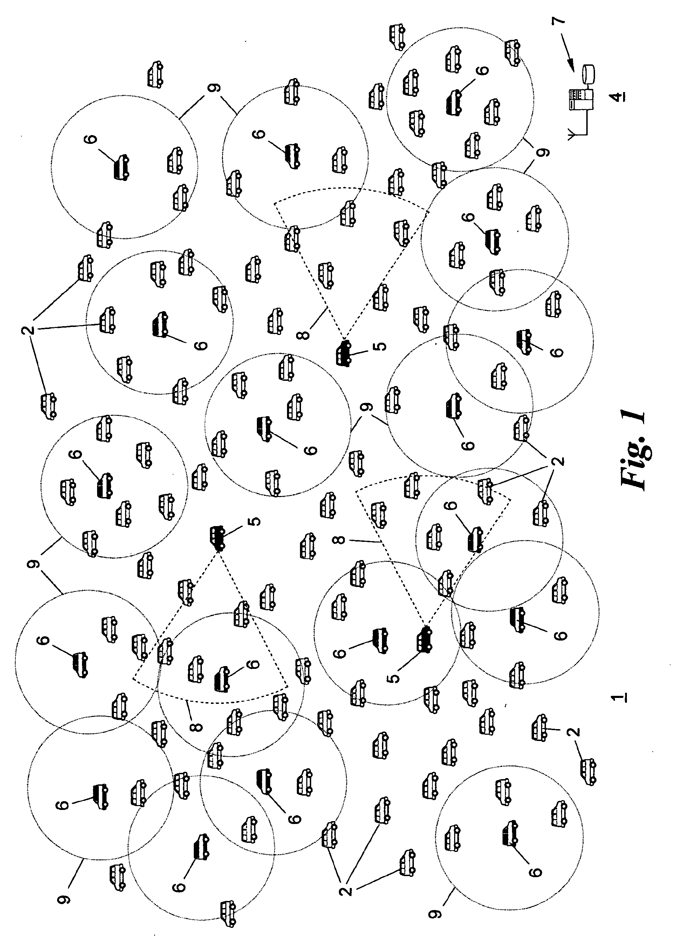

Fig. 1 zeigt schematisch ein Straßenmautsystem 1, in dessen Rahmen sich eine Vielzahl mautpflichtiger Fahrzeuge 2 auf einem nicht näher dargestellten, z.B. landesweiten Straßennetz bewegen. Das Straßenmautsystem 1 dient dazu, beliebige Straßennutzungen der Fahrzeuge 2 zu vermauten (vergebühren), und zwar sowohl Nutzungen von Verkehrsflächen des fließenden Verkehrs in Form von z.B. Wege-, Gebiets-, Übertritts- oder Grenzmaut als auch von Verkehrsflächen des ruhenden Verkehrs in Form von z.B. Aufenthalts- oder Parkgebühren.

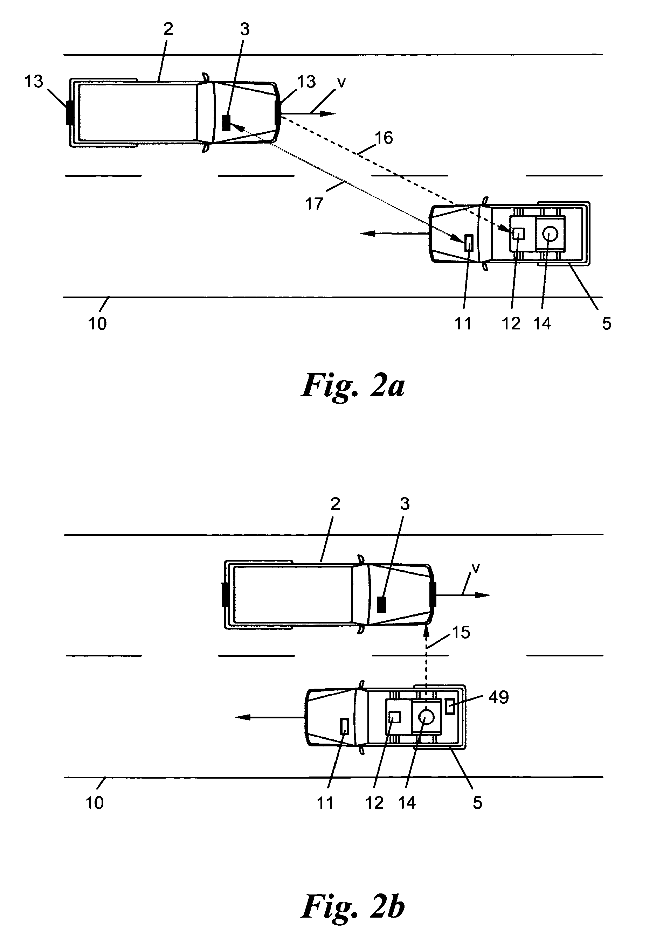

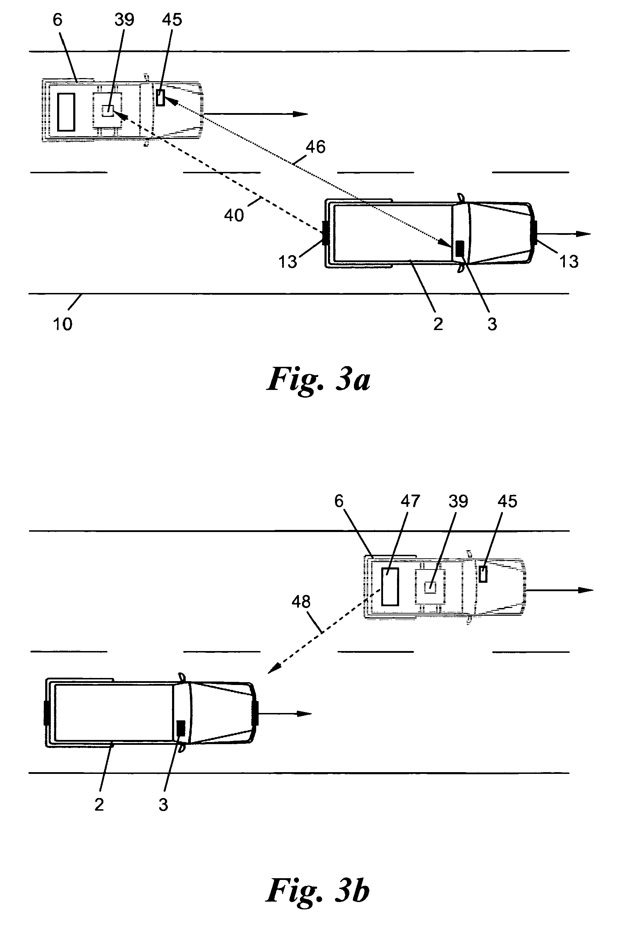

Zu diesem Zweck sind gemäß den Fig. 2 und 3 alle mautpflichtigen Fahrzeuge 2 mit Onboard-Units (OBUs) 3 ausgestattet, mit deren Hilfe die Fahrzeuge 2 verortet und in der Folge vermautet werden können. Die OBUs 3 können von verschiedenster Art sein: Einerseits können die OBUs 3 von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale 4 des Straßenmautsystems 1 melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs 3 ihre Ortsmeldungen oder Mauttransaktionen einfach speichern oder daraus berechnete Gebühren von einem internen Mautguthaben abbuchen. Anderseits können die OBUs 3 von "fremd-verortetem" Typ sein, beispielsweise mit Hilfe einer Vielzahl geographisch über das Straßenmautsystem 1 verteilter Maut- bzw. Funkbaken, welche jeweils Kurzreichweiten- bzw. DSRC-Funkkommunikationen (dedicated short range communications) mit passierenden OBUs 3 aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs 3 oder den Mautbaken erzeugt und entweder in den OBUs 3 oder in der Zentrale 4 verarbeitet werden.

Zur korrekten Mautberechnung im Straßenmautsystem 1 werden in den OBUs 3 jeweils ein oder mehrere für das jeweilige Fahrzeug 2 spezifische Mautparameter OC eingestellt oder gespeichert. Die Mautparameter OC können beliebiger Art sein und z.B. über Einsatzzweck des Fahrzeugs 2 (z.B. Einsatzfahrzeug, öffentliches Verkehrsmittel, Privatfahrzeug, Lastkraftwagen usw.), Status des Benutzers des Fahrzeugs 2, über Größe, Gewicht, Schadstoffklasse, Anzahl der Achsen des Fahrzeugs 2 mit oder ohne Anhänger usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter OC der OBU 3 zurückgegriffen, um die Höhe der Maut - oder überhaupt die Mautpflicht - zu ermitteln.

Im weiteren werden hier solche Mautparameter OC betrachtet, die durch eine Überprüfung des äußeren Erscheinungsbilds, d.h. der *Form* des Fahrzeugs 2, welches die OBU 3 mitführt, validiert (gegengeprüft) werden können. Solche Mautparameter OC werden hier als fahrzeugformspezifisch bezeichnet. Fahrzeugformspezifische Mautparameter OC können z.B. eine oder mehrere Abmessungen des Fahrzeugs 2, seine Karosserieform (Kastenaufbau, Pritschenaufbau, PKW- oder LKW-Aufbau), Anzahl der Achsen, Anzahl der Anhänger usw. sein.

Die im weiteren beschriebenen Kontrollvorrichtungen und -verfahren sind für solche OBUs 3 geeignet, deren darin eingestellte bzw. gespeicherte fahrzeugformspezifische Mautparameter OC über eine DSRC-Funkschnittstelle auslesbar sind, wie es beispielsweise bei DSRC-OBUs nach den Standards RFID, CEN-DSRC, UNI-DSRC, ITS-G5 oder WAVE (wireless access in a vehicle environment) der Fall ist. Auch GNSS-OBUs 3, welche zusätzlich eine DSRC-Funkschnittstelle zur Kontrollauslesung ihrer Mautparameter haben, sind geeignet und können in der folgenden Weise kontrolliert werden.

Darüber hinaus sind die hier beschriebenen Kontrollvorrichtungen und -verfahren natürlich auch in der Lage, festzustellen, ob ein mautpflichtiges Fahrzeug 2 überhaupt mit einer OBU 3 ausgestattet ist und - da das Auslesen der Mautparameter eine korrekt funktionierende OBU 3 voraussetzt - dabei auch die Funktionsfähigkeit einer OBU 3 mitzuprüfen.

Schließlich sind die beschriebenen Kontrollvorrichtungen- und Verfahren auch befähigt, allgemeine Verkehrsdelikte der Fahrzeuge 2 zu detektieren und zu ahnden, wie Geschwindigkeitsübertretungen, Übertretungen von (Nacht-)Fahrverboten und sonstige Verkehrsvergehen, soweit sie automatisch mit Hilfe von Messeinrichtungen, Sensoren usw. detektiert werden können.

Zu den genannten Kontrollzwecken wird im Straßenmautsystem 1 eine Kontrollvorrichtung eingesetzt, die sich aus einer ersten Flotte von Aufzeichnungsfahrzeugen 5, einer zweiten Flotte von Kontrollfahrzeugen 6 und einem Deliktserver 7 in der Zentrale 4 zusammensetzt.

Bevorzugt werden wesentlich mehr Kontrollfahrzeuge 6 vorgesehen als Aufzeichnungsfahrzeuge 5. Das Verhältnis der Anzahl von Kontrollfahrzeugen 6 zu Aufzeichnungsfahrzeugen 5 beträgt bevorzugt mindestens 10:1, bevorzugt 100:1, 1000:1 und mehr. Wie nachfolgend erläutert sind Kontrollfahrzeuge 6 einfacher aufgebaut als Aufzeichnungsfahrzeuge 5 und werden mit einem anderen Bewegungsverhalten betrieben, was ein ausgewogenes Abdeckungsverhältnis der Wirkungsbereiche von Aufzeichnungs- und Kontrollfahrzeugen bei minimalen Kosten ergibt: Die Aufzeichnungsfahrzeuge 5 bewegen sich ständig im fließenden Verkehr und ihre Interaktionen mit den zu kontrollierenden Fahrzeugen 2 sind kurz, wogegen die Kontrollfahrzeuge 6 sowohl beweglich als auch stationär eingesetzt werden können und, wenn sie Anhaltekontrollen bzw. Ahndungen von Mautdelikten durchführen, längere Interaktionen mit den kontrollierten Fahrzeugen 2 eingehen.

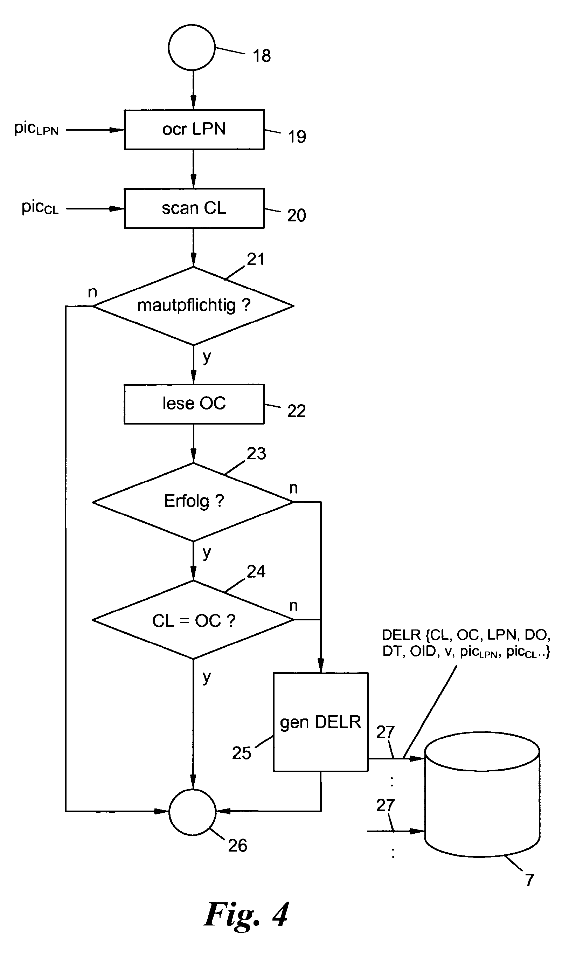

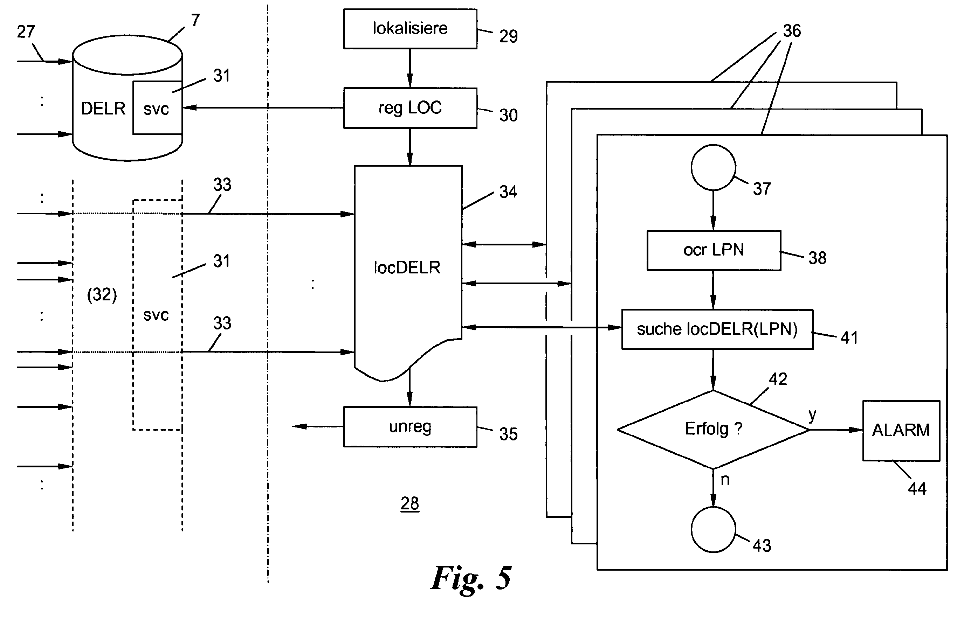

Wie Fig. 1 im Überblick zeigt, dienen die Aufzeichnungsfahrzeuge 5 dazu, in ihren jeweiligen begrenzten Erfassungsbereichen 8 Fahrzeuge 2, die ein Verkehrs- oder Mautdelikt begehen, z.B. eine Geschwindigkeitsübertretung, oder die keine, eine mangelhaft funktionierende oder falsch eingestellte OBU 3 haben, aufzuspüren und dies als Verkehrs- oder Mautdelikt in Form eines Deliktdatensatzes an den Deliktserver 7 zu senden; die dabei zwischen Aufzeichnungsfahrzeug 5 und Fahrzeug 2 ablaufenden Interaktionen werden später anhand der Fig. 2 und 4 noch ausführlicher erläutert. Die Kontrollfahrzeuge 6 dienen dazu, in ihrer jeweiligen Umgebung 9 befindliche Fahrzeuge 2 in Bezug auf für diese am Deliktserver 7 bereitgestellte Deliktdatensätze zu überprüfen und, wenn ein Deliktdatensatz für ein Fahrzeug 2 vorliegt, eine Alarmmeldung abzugeben. Die Besatzung des Kontrollfahrzeuges 6 kann dann die entsprechenden weiteren Überprüfungs- und Ahnungsmaßnahmen treffen, z.B. das Fahrzeug 2 anhalten, eine Verkehrskontrolle durchführen, eine Maut nachverrechnen, eine Geldstrafe verhängen usw. Die dabei zwischen Kontrollfahrzeug 6, Deliktserver 7 und Fahrzeug 2 ablaufenden Interaktionen werden später anhand der Fig. 3 und 5 näher erläutert.

Die Aufzeichnungsfahrzeuge 5, die Kontrollfahrzeuge 6 und der Deliktserver 7 stehen dazu über ein Drahtlosnetzwerk miteinander in Verbindung, z.B. ein Mobilfunknetz, insbesondere ein GSM-, UMTS- oder LTE-Netz, aber auch satellitenbasierte Mobilfunknetze (z.B. Iridium), bevorzugt über paketvermittelte Verbindungen. Alternativ wäre es auch denkbar, ein Netz geographisch verteilter Funkbaken im Straßenmautsystem 1 zu verwenden, beispielsweise DSRC-Funkbake, über welche die Aufzeichnungs- und Kontrollfahrzeuge 5, 6 jeweils bei der Passage einer Bake kommunizieren können.

Die Fig. 2a und 2b zeigen eines der Aufzeichnungsfahrzeuge 5 im Detail zu zwei aufeinanderfolgenden Zeitpunkten bei der Passage eines Fahrzeugs 2 auf einer Fahrbahn 10 im Gegenverkehr. Das Aufzeichnungsfahrzeug 5 verfügt über einen DSRC-Sendeempfänger 11 zur DSRC-Funkkommunikation mit der OBU 3 des Fahrzeugs 2, eine Kennzeichenleseeinrichtung 12 zum automatischen Lesen (optical character recognition, OCR) einer Kennzeichentafel 13 des Fahrzeugs 2, sowie einen Sensor 14, hier einen Laserscanner, zum Erfassen eines Parameters der Außenform des Fahrzeugs 2, im weiteren Formparameter CL genannt.

Der Formparameter CL ist in dem vorliegenden Beispiel eine Fahrzeugklasse ("PKW", "LKW mit zwei Achsen", "LKW mit drei Achsen", "LKW mit vier Achsen", "LKW mit Anhänger" usw.); es versteht sich jedoch, dass auch jede andere Eigenschaft der Außenform des Fahrzeugs 2, die mit dem Sensor 14 ermittelt werden kann, als Formparameter CL dienen kann, analog dem erörterten fahrzeugformspezifischen Mautparameter OC.

Der Sensor 14 zur Erfassung des Formparameters CL kann auf jede in der Technik bekannte Art aufgebaut werden, beispielsweise in Form einer elektronischen Kamera, die eines oder mehrere Bilder pic_{CL} des passierenden Fahrzeugs 2, auch unter unterschiedlichen Blickwinkeln, aufnehmen kann, aus welchen Bildern pic_{CL} dann durch Bilderkennungssoftware entsprechende Eigenschaften und Formparameter des Fahrzeugs 2 extrahiert werden können. Alternativ kann der Sensor 14 ein Radar- oder Laserentfernungsmesser oder -scanner sein, welcher das Fahrzeug 2 bei der Passage mit einem Radar- oder Laserstrahl oder -fächer 15 abtastet, um eine oder mehrere Abmessungen oder Konturen des passierenden Fahrzeugs 2 in Form eines Abtastprofils einer Abtastpunktewolke zu erfassen.

Die Kennzeichenleseeinrichtung 12 des Aufzeichnungsfahrzeugs 5 führt ein in der Technik bekanntes OCR-Lesen an einer (oder mehreren) Bildaufnahme(n) pic_{OCR} eines behördlichen Kennzeichens LPN auf der Kennzeichentafel 13 des Fahrzeugs 2 durch ("automatic license plate number recognition", ALNR); ihr Abbildungspfad bzw. Informationsfluss ist schematisch mit dem Pfeil 16 dargestellt.

Der DSRC-Sendeempfänger 11 des Aufzeichnungsfahrzeugs 5 baut eine DSRC-Funkkommunikation 17 mit der OBU 3 auf, um a) damit festzustellen, ob überhaupt eine OBU 3 auf dem Fahrzeug 2 vorhanden ist, b) damit (implizit) zu überprüfen, ob die OBU 3 antwortet, d.h. korrekt funktioniert, und c) den in der OBU 3 eingestellten oder gespeicherten Mautparameter OC für die weitere Überprüfung auszulesen. Bei dieser Überprüfung soll der ausgelesene Mautparameter OC der OBU 3 mit dem vom Sensor 14 erfassten Formparameter CL des Fahrzeugs 2 konsistent sein: Wenn der Mautparameter OC beispielsweise "dreiachsiger LKW" angibt, sollte der Sensor 14 auch einen damit konsistenten Formparameter CL detektieren, wenn nicht, liegt ein Mautdelikt vor und das Fahrzeug 2 ist ein "Deliktfahrzeug".

Es versteht sich, dass ein aus der OBU 3 ausgelesener Mautparameter OC zusätzlich auch noch von anderen Komponenten abhängen kann als der Fahrzeugform, z.B. dem Status oder Einsatzzweck des Fahrzeugs 2, der Uhrzeit, zeitlichen Rahmenbedingungen (z.B. Nachtfahrverbot), Fahrzeug-Emissionsklassen-Beschränkungen, Geschwindigkeiten usw., was bei der Deliktprüfung ebenfalls berücksichtigt werden kann.

Alle Komponenten DSRC-Sendeempfänger 11, Kennzeichenleseeinrichtung 12 und Sensor 14 des Aufzeichnungsfahrzeugs 5 stehen untereinander - gegebenenfalls über eine (nicht dargestellte) Steuereinrichtung - in Verbindung, und das Aufzeichnungsfahrzeug 2 kann wie geschildert mit dem zentralen Deliktserver 7 über eine (nicht dargestellte) Kommunikationseinrichtung drahtlos kommunizieren.

Unter Bezugnahme auf die Fig. 2 und 4 werden nun die Funktionsweise des Aufzeichnungsfahrzeugs 5 und das bei der Passage eines Fahrzeugs 2 ablaufende Aufzeichnungsverfahren näher erläutert. Bei Annäherung des Fahrzeugs 2 an das Aufzeichnungsfahrzeug 5 (Schritt 18) wird in einem ersten Schritt 19 das Kennzeichen LPN des Fahrzeugs 2 mit Hilfe der Kennzeichenleseeinrichtung 12 von der Kennzeichentafel 13 gelesen (Pfeil 16). Der Schritt 19 kann auch zu jedem späteren Zeitpunkt des Verfahrens von Fig. 4 ausgeführt werden, solange das Kennzeichenleseergebnis LPN noch nicht benötigt wird, so beispielsweise auch später durch Lesen der rückwärtigen Kennzeichentafel 13 des Fahrzeugs 2.

Anschließend wird in einem Schritt 20 mit Hilfe des Sensors 14 der Formparameter CL des Fahrzeugs 2 erfasst, im gezeigten Beispiel durch Laserscannen und Detektieren der Achsanzahl des Fahrzeugs 2, woraus eine achsbezogene Fahrzeugklasse ("class") als Formparameter CL ermittelt wird.

In einem anschließenden Entscheidungsschritt 21 wird aufgrund des Formparameters CL überprüft, ob das Fahrzeug 2 überhaupt mautpflichtig ist oder nicht. Beispielsweise könnten zweiachsige Fahrzeuge 2 als nicht-mautpflichtig und Fahrzeuge 2 mit mehr als zwei Achsen als mautpflichtig definiert sein. Wenn der Formparameter CL Mautpflicht anzeigt (Zweig "y"), wird im anschließenden Schritt 22 die OBU 3 mit Hilfe des DSRC-Sendeempfängers 11 kontaktiert (Pfeil 17). Dabei wird der Mautparameter OC aus der OBU 3 ausgelesen und eine erfolgreiche Auslesung zeigt gleichzeitig an, dass die OBU 3 vorhanden ist und funktioniert. Im darauffolgenden Entscheidungsschritt 23 wird bei einem Fehlschlagen des Auslesens (Zweig "n") direkt zum Schritt 25 der Erzeugung eines Deliktdatensatzes DELR übergegangen.

Andernfalls (Zweig "y" von Schritt 23) wird in der weiteren Entscheidung 24 überprüft, ob der erfasste Formparameter CL und der ausgelesene Mautparameter OC zueinander passen bzw. konsistent sind, d.h. der Mautparameter OC der OBU 3 so eingestellt ist, dass er dem aufgrund der Außenform des Fahrzeugs 2 erfassten Formparameter CL entspricht. Wenn ja (Zweig "y"), ist alles in Ordnung und das Verfahren endet bei 26. Wenn nein (Zweig "n"), liegt eine Inkonsistenz vor, welche ein mögliches Mautdelikt darstellt, und es wird zu Schritt 25 des Erzeugens des Deliktdatensatzes DELR übergegangen.

Im Schritt 25 wird der Deliktdatensatz DELR erzeugt, welcher den erfassten Formparameter CL, den ausgelesenen Mautparameter OC und das Kennzeichenleseergebnis LPN enthält, sowie optional weitere Daten wie den aktuellen Ort ("Deliktort") DO und die aktuelle Zeit ("Deliktzeit") DT des Aufzeichnungsvorgangs, aus der OBU 3 ausgelesene weitere Stammdaten wie OBU-Kennung OID, Benutzer-Stammdaten, Fahrzeug-Stammdaten usw.

Der Deliktort DO kann dabei auch verschiedenste Arten ermittelt werden: Das Aufzeichnungsfahrzeug 5 kann über eine eigene Positionsbestimmungseinrichtung verfügen, z.B. einen Satellitennavigationsempfänger, und den aktuellen Ort der Passage als Deliktort DO aufzeichnen. Alternativ kann die OBU 3, insbesondere wenn sie von selbst-verortendem Typ ist, ihre aktuelle Position als Deliktort DO dem Aufzeichnungsfahrzeug 5 zur Verfügung stellen. Auch die bekannten Orte benachbarter Funkbaken eines bakenbasierten Straßenmautsystems 1 können näherungsweise herangezogen werden.

Der Deliktdatensatz DELR wird anschließend im Schritt 27 an den Deliktserver 7 zur weiteren Verwendung durch die Kontrollfahrzeuge 6 gesandt.

Es versteht sich, dass die Schritte 19 bis 24 - soweit sie nicht einander voraussetzen - auch in anderer Reihenfolge vorgenommen werden können.

Die im Deliktserver 7 und einem beispielhaften Kontrollfahrzeug 6 ablaufenden Schritte werden anhand der Fig. 3 und 5 erläutert. Die Fig. 3a und 3b zeigen die Situation bei der Passage eines Kontrollfahrzeugs 6 an einem zu kontrollierenden Fahrzeug 2 zu zwei aufeinanderfolgenden Zeitpunkten. In Vorbereitung (oder während) einer solchen Kontrolle werden den Kontrollfahrzeugen 6 vom Deliktserver 7 selektiv jene Deliktdatensätze DELR zur Verfügung gestellt, welche von Delikten aus ihrer jeweiligen Umgebung 9 stammen.

Zu diesem Zweck registriert sich in einer Registrierungsphase 28 jedes Kontrollfahrzeug 6 mit seiner eigenen Position LOC (oder gleich mit seiner Umgebung 9) im Deliktserver 7. Die aktuelle Position LOC (oder Umgebung 9) des Kontrollfahrzeugs 6 kann von diesem beispielsweise in einem Positionsermittlungsschritt 29 autark selbst ermittelt werden, z.B. mit Hilfe eines Satellitennavigationsempfängers, durch Informationen benachbarter Funkbaken od.dgl. Alternativ kann die Position LOC oder Umgebung 9 auch vom Benutzer manuell im Schritt 29 in eine Eingabeeinheit des Kontrollfahrzeugs 6 eingegeben werden.

Im anschließenden Registrierungsschritt 30 registriert sich das Kontrollfahrzeug 6 mit seiner Position LOC (oder Umgebung 9) im Deliktserver 7, welcher für jedes registrierte Kontrollfahrzeug 6 einen eigenen Task 31 eröffnet.

Mit Hilfe des Tasks 31 kann der Deliktserver 7 alle in den Schritten 27 eingelangten und weiter einlangenden Deliktdatensätze DELR ortsspezifisch "filtern" (Phase 32): Der Deliktserver überprüft dabei, ob der Deliktort DO eines Deliktdatensatzes DELR in die Umgebung 9 um die Position LOC eines Kontrollfahrzeugs 6 fällt und, wenn ja, stellt er diesen Deliktdatensatz DELR diesem Kontrollfahrzeug 6 zur Verfügung (Schritt 33). Das Kontrollfahrzeug 6 nimmt die ihm auf diese Weise bereitgestellten Deliktdatensätze DELR in eine lokale Deliktdatensatzliste locDELR 34 auf.

Das Bereitstellen der ortsspezifisch gefilterten Deliktdatensätze DELR im Schritt 33 kann sowohl fortlaufend, z.B. periodisch oder im Anlassfall, erfolgen, beispielsweise indem jeder einzelne Deliktdatensatz DELR vom Deliktserver 7 an das Kontrollfahrzeug 6 gesandt wird, oder stapelweise (in Batch-Verarbeitung), indem sich das Kontrollfahrzeug 6 jeweils die zu einem bestimmten Zeitpunkt bereitgestellten Deliktdatensätze DELR vom Deliktserver 7 abholt oder von diesem geschickt bekommt.

Die Deliktdatensätze DELR tragen mit ihrer optionalen Deliktzeit DT auch jeweils einen "Zeitstempel", der ihre zeitliche Gültigkeit begrenzen kann: So können "zu alte" Deliktdatensätze DELR, d.h. solche, deren Zeitstempel DT außerhalb eines vorgegebenen Zeitraums liegt, automatisch verworfen werden, sowohl im Deliktserver 7 als auch im Kontrollfahrzeug 6, und/oder der Deliktserver 7 kann einem Kontrollfahrzeug 6 auch nur "aktuelle" Deliktdatensätze DELR zur Verfügung stellen, d.h. solche, deren Zeitstempel DT innerhalb eines vorgegebenen Zeitraums liegt.

In der Registrierungsphase 28 "abonnieren" die Kontrollfahrzeuge 6 somit gleichsam Deliktdatensätze DELR aus ihrer Umgebung 9, und dies z.B. solange, bis sie in einem Schritt 35 eine Deregistrierungsanforderung an den Deliktserver 7 senden, woraufhin dieser den Task 31 löscht.

Die Kontrollfahrzeuge 6 sind auf dieser Weise jeweils mit aktuellen und ortsspezifischen Deliktdatensätzen DELR aus ihrer Umgebung 9 bestückt und können bei der Passage bzw. Kontrolle eines Fahrzeugs 2 Kontrolltasks 36 ausführen, welche jeweils auf die lokale Deliktdatensatzliste 34 zugreifen.

In jedem Kontrolltask 36 wird gemäß den Fig. 3 und 5 bei Annäherung eines Fahrzeugs 2 (Schritt 37) in einem ersten Schritt 38 das Kennzeichen LPN von der Kennzeichentafel 13 mit Hilfe einer Kennzeichenleseeinrichtung 39 des Kontrollfahrzeugs 6 automatisch gelesen (Pfeil 40). Anschließend sucht das Kontrollfahrzeug 6 im Schritt 41 einen dazu passenden Deliktdatensatz DELR aus seiner lokalen Deliktdatensatzliste 34 heraus, soferne ein solcher vorhanden. Wenn zu dem Kennzeichenleseergebnis LPN kein Deliktdatensatz DELR vorhanden ist (Zweig "n" im Überprüfungsschritt 42), endet der Task 36 bei 43 und das Kennzeichenleseergebnis LPN kann z.B. zwecks Vertraulichkeit wieder gelöscht werden. Existiert jedoch ein Deliktdatensatz DELR zum Kennzeichenleseergebnis LPN (Zweig "y"), wird zum Alarmschritt 44 verzweigt, in welchem das Kontrollfahrzeug 6 eine Alarmmeldung an seine Besatzung ausgibt.

Die Alarmmeldung kann beispielsweise ein optischer oder akustischer Alarm sein oder eine Anzeige auf einem Bildschirm, welche gleichzeitig das gelesene Kennzeichen LPN und den Deliktdatensatz DELR anzeigt. Die Besatzung kann dann entsprechende Ahndungsmaßnahmen ergreifen, z.B. das Fahrzeug 2 anhalten, die OBU 3 weiter überprüfen und gegebenenfalls eine entsprechende Nachmaut verrechnen oder Strafe verhängen. Die Alarmmeldung kann zusätzlich automatisch auf einer nach außen sichtbaren Signaleinrichtung 47 des Kontrollfahrzeugs 6 für das kontrollierte Fahrzeug 2 angezeigt werden (Pfeil 48), um dieses z.B. zum Anhalten aufzufordern, beispielsweise mit einer Leuchtschrift "STOP".

Optional kann der Task 36 zusätzlich auch nochmals die OBU 3 mit Hilfe eines DSRC-Sendeempfängers 45 des Kontrollfahrzeugs 6 ausgelesen werden (Pfeil 46), z.B. für weitere Konsistenzprüfungen oder Identifikationen.

Der Deliktserver 7 kann optional mit Schätzungsalgorithmen ausgestattet werden, welche eine Schätzung der zeitlichen Veränderungen der Deliktorte DO (als "letzte Aufenthaltsorte" der Deliktfahrzeuge 2) aufgrund von bei der Deliktaufzeichnung gemessenen Geschwindigkeiten und Fahrtrichtungen der Fahrzeuge 2 durchführen. Dazu kann das Aufzeichnungsfahrzeug 5 mit einer Einrichtung 49 zur Messung von Geschwindigkeit und Fahrtrichtung, d.h. des Bewegungsvektors v, eines Fahrzeugs 2 ausgestattet werden. Die Einrichtung 49 kann auch durch eine als Videokamera ausgebildete Kennzeichenleseeinrichtung 12, in deren Bildern Bewegungen detektiert werden können, oder einen als Doppler-Radar ausgeführten DSRC-Sendeempfänger 11 oder durch entsprechende Messungen mit Hilfe des Sensors 14, z.B. Laser- oder Lidar-Messungen am Abtaststrahl bzw. -fächer 15, realisiert werden.

Die Geschwindigkeitsmesseinrichtungen 11, 12, 14, 49 des Aufzeichnungsfahrzeugs 5 können überdies zur Detektion allgemeiner Verkehrsdelikte der Fahrzeuge 2 eingesetzt werden, z.B. zur Detektion von Geschwindigkeitsübertretungsdelikten.

Der Bewegungsvektor v des Fahrzeugs 2 zum Deliktzeitpunkt DT kann in den Deliktdatensatz DELR integriert und dem Deliktserver 7 übermittelt werden. Der Deliktserver 7 kann daraufhin für spätere Zeitpunkte mögliche neue Aufenthaltsorte DO des Fahrzeugs 2 extrapolieren bzw. schätzen, auch unterstützt durch Straßennetzpläne des Straßennetzes, und in der Phase 32 für jene Zeitpunkte berücksichtigen, zu denen die Auswahl der für eine Umgebung 9 eines Kontrollfahrzeugs 6 relevanten Deliktdatensätze DELR vorgenommen wird. Dadurch können Deliktdatensätze DELR von Fahrzeugen 2, deren Deliktorte DO früher außerhalb einer Umgebung 9 um die Position LOC eines Kontrollfahrzeugs 6 lagen, zu einem späteren Zeitpunkt - extrapoliert - in die Umgebung 9 fallen und damit diesem Kontrollfahrzeug 6 bzw. dessen lokaler Deliktdatensatzliste 34 zur Verfügung gestellt werden.

Die Umgebungen 9 der Kontrollfahrzeuge 6 werden auf diese Weise zeitdynamisch angepasst. Überdies können die Umgebungen 9 speziell an die Gegebenheiten des Straßennetzes angepasst werden, auf dem sich das Kontrollfahrzeug 6 bewegt, um auch dessen eigene Bewegung zu berücksichtigen: Die Umgebungen 9 sind dann nicht mehr (wie in Fig. 1 schematisch dargestellt) Kreise, sondern werden entsprechend den Eigenbewegungen eines Kontrollfahrzeugs 6 und seiner Möglichkeiten zu Abzweigungen im Straßennetz dynamisch angepasst, z.B. elliptisch oder baumförmig, um stets jene Auswahl von Deliktdatensätzen DELR vom Deliktserver 7 zu erhalten und in die lokale Deliktdatensatzliste locDELR 34 aufnehmen zu können, für die es am wahrscheinlichsten ist, dass das Kontrollfahrzeug 6 bei seiner weiteren Bewegung auf diese Deliktfahrzeuge 2 trifft. Alternativ können auch beliebige Formen von Umgebungen 9 vorgegeben werden.

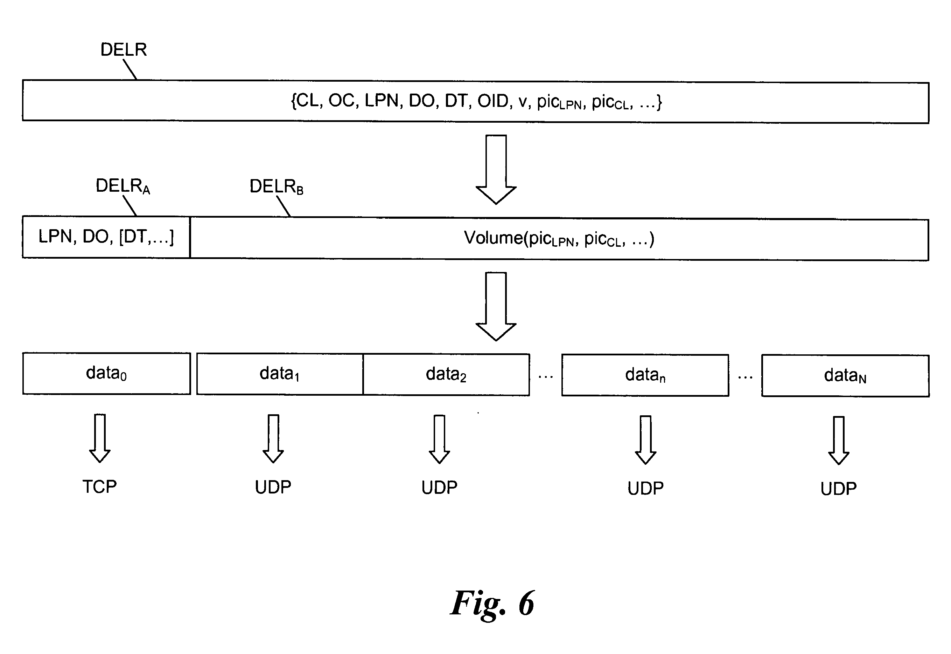

Gemäß Fig. 6 können die Schritte 27 des Sendens des Deliktdatensatzes DELR von einem Aufzeichnungsfahrzeug 5 an den Deliktserver 7 und/oder die Schritte 33 des Senden des Deliktdatensatzes DELR vom Deliktserver 7 zu einem Kontrollfahrzeug 6 im Zuge des Bereitstellungsvorganges 31 - 33 speziell für hochlatente Drahtlosnetzwerke wie satellitenbasierte Mobilfunknetze, z.B. Iridium, angepasst werden, über welche die Aufzeichnungsfahrzeuge 5, Kontrollfahrzeuge 6 und Deliktserver 7 miteinander in Verbindung stehen.

Dazu werden die Deliktdatensätze DELR jeweils in einen ersten Teil DELR_{A} mit kleinem Datenvolumen und einen zweiten Teil DELR_{B} mit großem Datenvolumen aufgeteilt. Der erste Teil DELR_{A} enthält die für die Kontrolltasks 36 der Kontrollfahrzeuge 6 unbedingt erforderlichen Daten, insbesondere das Kennzeichenleseergebnis LPN und den Deliktort DO, sowie optional die Deliktzeit DT, die OBU-Kennung OID und/oder grundlegende Deliktdaten wie die Deliktfahrzeug-Geschwindigkeit v. Die bevorzugte Größe des ersten Teils DELR_{A} ist einige Hundert Byte, bevorzugt nicht mehr als 100 Byte, um eine paketvermittelte Datenübertragung über ein verbindungsorientiertes paketvermitteltes Transportprotokoll in Form eines einzigen Datenpakets data₀ zu ermöglichen.

Der zweite Teil DELR_{B} enthält jene Daten, die im ersten Teil DELR_{A} nicht Platz gefunden haben und die nicht zeitkritisch für das Aufgreifen eines Deliktfahrzeugs im Kontrolltask 36 sind, vor allem großvolumige Bilddaten wie eine (oder mehrere) Bildaufnahmen pic_{LPN} der Kennzeichenleseeinrichtung 12, anhand der(en) das Kennzeichen LPN gelesen wurde, und/oder eine (oder mehrere) Bildaufnahmen, Scans usw. pic_{CL} des Sensors 14, anhand der(en) der Formparameter CL erfasst wurde. Der zweite Teil DELR_{B} ist für die Übertragung in einem paketvermittelten verbindungslosen Transportprotokoll bestimmt und kann dazu in aufeinanderfolgende Datenpakete data₁, data₂, ..., dataₙ, ..., data_{N} (n = 1...N) aufgeteilt werden. Auch die Paketgröße der Datenpakete dataₙ des zweiten Teils DELR_{B} beträgt bevorzugt einige Hundert Byte, besonders bevorzugt etwa 100 Byte.

Die Pakete dataₙ sind bevorzugt durchnumeriert (hier: mit dem Index n) und werden über ein verbindungsloses Transportprotokoll versandt, welches keinen Bestätigungsmechanismus (handshaking) für die einzelnen Pakete besitzt, sodass der Sender die Pakete dataₙ ohne Abwarten einer Bestätigung versenden kann. Im Empfänger werden die einlangenden Datenpakete dataₙ gesammelt; nach Empfang einer Mehrzahl von Paketen dataₙ kann anhand ihrer Numerierung n die Übertragung auf Vollständigkeit überprüft und allfällig fehlende Pakete vom Empfänger anschließend beim Sender nachangefordert werden.

Als verbindungsorientiertes Transportprotokoll für das Versenden des ersten Teils DELR_{A} in Form eines bevorzugten einzigen Datenpakets data₀ eignet sich insbesondere das Protokoll TCP (transmission control protocol), wie es beispielsweise in den Standards RFC 793, RFC 1323 und darauf aufbauenden Standards der Internet Engineering Task Force (IETF) definiert ist und auch Grundlage bzw. Bestandteil des heutigen Internetprotokolls (IP) ist. Der Empfänger bestätigt dabei den Empfang jedes TCP-Datenpakets zurück an den Sender.

Als verbindungsloses Transportprotokoll für das Versenden des zweiten Teils DELR_{B}, der dazu in einzelne Datenpakete dataₙ aufgeteilt wird, eignet sich insbesondere das Protokoll UDP (user datagram protocol), wie es beispielsweise in den IETF-Standards RFC 768 und darauf aufbauenden Standards definiert ist und auch Bestandteil und Grundlage des heutigen Internetprotokolls (IP) ist. UDP-Datenpakete werden vom Empfänger nicht an den Sender zurückbestätigt.

Die geschilderten Sendeschritte 27 und 33 eines Deliktdatensatzes DELR können demgemäß zeitlich zerfallen, und zwar jeweils in eine erste (bestätigte) Übertragung des Teils DELR_{A} und mehrere zweite, beim Empfänger erst nach und nach und gegebenenfalls auch in vertauschter Reihenfolge eintreffende Übertragungen von Datenpaketen dataₙ des zweiten Teils DELR_{B}. Für die grundlegende Kontrollfunktionalität der Kontrolltasks 36, insbesondere für den Ermittlungsschritt 41, ob im Deliktserver ein Deliktdatensatz DELR zu einem gelesenen Kennzeichen LPN vorliegt, ist die Übersendung des ersten Teils DELR_{A} ausreichend. Für die Ahndung von Verkehrsvergehen kann das Kontrollfahrzeug 6 anschließend den vollständigen Empfang des zweiten Teils DELR_{B} des Deliktdatensatzes DELR abwarten und z.B. anhand der darin angegebenen großvolumigen Bilddaten pic_{LPN} und pic_{CL} die korrekte Lesung des Kennzeichenleseergebnisses LPN und die korrekte Erfassung des Mautparameters CL verifizieren, z.B. automatisiert von sich aus nachprüfen, bevor eine Strafmaßnahme betreffend das Verkehrsdelikt gesetzt wird.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Kontrolle in einem Straßenmautsystem (1), das auf von Fahrzeugen (2) mitgeführten Onboard-Units (3) basiert, unter Verwendung zumindest eines Aufzeichnungsfahrzeugs (5) und zumindest eines Kontrollfahrzeug (6), die drahtlos mit einem zentralen Deliktserver (7) kommunizieren können, umfassend:
im Aufzeichnungsfahrzeug (5):
- Detektieren (20, 22) eines Verkehrs- oder Mautdelikts einer Onboard-Unit (3) oder eines diese mitführenden Fahrzeugs (2) und, im Deliktfall,
- Senden (27) eines Deliktdatensatzes (DELR) mit einem ermittelten Deliktort (DO) und einem gelesenen Kennzeichen (LPN) des Fahrzeugs (2) an den Deliktserver (7);
im Deliktserver (7):
- Registrieren (30) von Kontrollfahrzeugen (6) mit Positionen (LOC) oder deren Umgebungen (9),
- Empfangen (27) von Deliktdatensätzen (DELR) von Aufzeichnungsfahrzeugen (5) und, wenn deren Deliktorte (DO) in die Umgebung (9) um eine Position (LOC) fallen,
- Bereitstellen (31-33) dieser Deliktdatensätze (DELR) einem mit dieser Position (LOC) bzw. Umgebung (9) registrierten Kontrollfahrzeug (6);
im Kontrollfahrzeug (6):
- Registrieren (29, 30) seiner Position (LOC) oder Umgebung (9) im Deliktserver (7),
- Kennzeichenlesen (38) einer Kennzeichentafel (13) eines passierenden Fahrzeugs (2),
- Ermitteln (41), zu einem gelesenen Kennzeichen (LPN), eines vom Deliktserver (7) bereitgestellten (33) Deliktdatensatzes (DELR) und, wenn ein solcher vorhanden,
- Ausgeben (44) einer Alarmmeldung;
wobei beim Senden eines Deliktdatensatzes (DELR) vom Aufzeichnungsfahrzeug (5) an den Deliktserver (7) und/oder vom Deliktserver (7) an das Kontrollfahrzeug (6) der Deliktdatensatz (DELR) in zwei Teile aufgeteilt wird, von denen der erste Teil (DELR_{A}) zumindest den Deliktort (DO) und das Kennzeichenleseergebnis (LPN) und der zweite Teil (DELR_{B}) weitere Deliktdaten (pic_{LPN}, pic_{CL}) enthält und der erste Teil (DELR_{A}) über ein verbindungsorientiertes und der zweite Teil (DELR_{B}) über ein verbindungsloses paketvermitteltes Transportprotokoll gesendet wird.

2. Verfahren nach Anspruch 1, **dadurch gekennzeichnet, dass** die Pakete (dataₙ) des zweiten Teils (DELR_{B}) durchnumeriert, nach Empfang einer Mehrzahl von Paketen (dataₙ) diese anhand ihrer Numerierung auf Vollständigkeit überprüft und fehlende Pakete (dataₙ) nachangefordert werden.

3. Verfahren nach Anspruch 1 oder 2, **dadurch gekennzeichnet, dass** die weiteren Daten im zweiten Teil (DELR_{B}) eine dem Kennzeichenleseergebnis (LPN) zugrundeliegende Bildaufnahme (pic_{LPN}) der Kennzeichentafel (13) des Fahrzeugs (2) enthalten.

4. Verfahren nach einem der Ansprüche 1 bis 3, zur Kontrolle eines Straßenmautsystems mit Onboard-Units (3), aus welchen zumindest ein fahrzeugformspezifischer Mautparameter (OC) über eine DSRC-Funkschnittstelle (17, 46) auslesbar ist, **gekennzeichnet durch**:
im Aufzeichnungsfahrzeug (5):
- Auslesen (22) des Mautparameters (OC) eines passierenden Fahrzeugs (2) mittels eines DSRC-Sendeempfängers (11),
- Erfassen (20) eines Formparameters (CL) des Fahrzeugs (2) mittels eines Sensors (14),
- Prüfen (24) des Mautparameters (OC) auf Konsistenz mit dem Formparameter (CL) und, bei Inkonsistenz,
- Senden (27) eines Deliktdatensatzes (DELR) mit Deliktort (DO) und Kennzeichenleseergebnis (LPN) des Fahrzeugs (2) an den Deliktserver (7).

5. Verfahren nach Anspruch 4, **dadurch gekennzeichnet, dass** die weiteren Daten im zweiten Teil (DELR_{B}) eine dem erfassten Formparameter (CL) zugrundeliegende Bildaufnahme (pic_{CL}) des Fahrzeugs (2) enthalten.

6. Verfahren nach einem der Ansprüche 1 bis 5, **dadurch gekennzeichnet, dass** das verbindungsorientierte Transportprotokoll TCP und das verbindungslose Transportprotokoll UDP ist.

7. Verfahren nach einem der Ansprüche 1 bis 6, **dadurch gekennzeichnet**, das die Pakete (data₀) des ersten Teils (DELR_{A}) eine Größe von nicht mehr als 100 Byte haben.

8. Verfahren nach einem der Ansprüche 1 bis 7, **dadurch gekennzeichnet, dass** das genannte Senden (27, 33) über eine Satellitenverbindung erfolgt.

9. Verfahren nach einem der Ansprüche 1 bis 8, **dadurch gekennzeichnet, dass** im Aufzeichnungsfahrzeug (5) Geschwindigkeit und bevorzugt Fahrtrichtung eines passierenden Fahrzeugs (2) gemessen werden und das Verkehrs- oder Mautdelikt auch auf Grundlage dieser Messwerte (v) bestimmt wird.

10. Verfahren nach einem der Ansprüche 4 bis 9, **dadurch gekennzeichnet, dass** der Formparameter (CL) und der Mautparameter (OC) jeweils eine Fahrzeuglänge oder -achsanzahl ist.

11. Verfahren nach einem der Ansprüche 1 bis 10, **dadurch gekennzeichnet, dass** der Deliktdatensatz (DELR) auch einen Zeitstempel (DT) enthält und im Deliktserver (7) nur Deliktdatensätze (DELR) mit einem Zeitstempel (DT) innerhalb eines vorgegebenen Zeitraums berücksichtigt und/oder im Kontrollfahrzeug (6) Deliktdatensätze (DELR) mit einem außerhalb eines vorgegebenen Zeitraums liegenden Zeitstempel (DT) verworfen werden.

12. Verfahren nach einem der Ansprüche 1 bis 11, **dadurch gekennzeichnet, dass** im Aufzeichnungsfahrzeug (5) Geschwindigkeit und bevorzugt Fahrtrichtung eines passierenden Fahrzeugs (2) gemessen und in den Deliktdatensatz (DELR) aufgenommen werden und daraus im Deliktserver (7) eine zeitliche Veränderung des Deliktorts (DO) extrapoliert wird, um diese bei der Überprüfung, ob ein Deliktort (DO) in die Umgebung (9) einer Position (LOC) zu einem Zeitpunkt fällt, zu berücksichtigen.

## Claims

1. A control method for a road toll system (1) which is based on on-board units (3) carried by vehicles (2), using at least one recording vehicle (5) and at least one control vehicle (6), which can wirelessly communicate with a central violation server (7), comprising the following steps:
in the recording vehicle (5):
- detecting (20, 22) a traffic or toll violation of an on-board unit (3) or of a vehicle carrying the same and, if a violation exists,
- transmitting (27) a violation data record (DELR), containing a determined location of the violation (DO) and a read license plate number (LPN) of the vehicle (2), to the violation server (7);
in the violation server (7):
- registering (30) control vehicles (6), including positions (LOC) or the surroundings (9) thereof,
- receiving (27) violation data records (DELR) from recording vehicles (5) and, if the locations of the violations (DO) thereof are within the surroundings (9) of a position (LOC),
- providing (31 to 33) these violation data records (DELR) to a control vehicle (6) that is registered with this position (LOC) or these surroundings (9);
in the control vehicle (6):
- registering (29, 30) the position (LOC) or surroundings (9) thereof in the violation server (7),
- reading (38) the license plate number (13) of a passing vehicle (2),
- determining (41) a violation data record (DELR) provided (33) by the violation server (7) for a read license plate number (LPN) and, if such a record exists,
- issuing (44) an alert message;
wherein, during the transmission of a violation data record (DELR) from the recording vehicle (5) to the violation server (7) and/or from the violation server (7) to the control vehicle (6), the violation data record (DELR) is divided into two parts, of which the first part (DELR_{A}) contains at least the location of the violation (DO) and the license plate number read result (LPN), and the second part (DELR_{B}) contains additional violation data (pic_{LPN}, pic_{CL}), and the first part (DELR_{A}) is transmitted via a connection-oriented and the second part (DELR_{B}) is transmitted via a connectionless packet-switched transport protocol.

2. The method according to claim 1, **characterized in that** the packets (dataₙ) of the second part (DELR_{B}) are consecutively numbered, checked for completeness based on the numbering thereof upon receipt of a plurality of packets (dataₙ), and missing packets (dataₙ) are subsequently requested.

3. The method according to claim 1 or 2, **characterized in that** the additional data in the second part (DELR_{B}) contains a recorded image (pic_{LPN}) of the license plate (13) of the vehicle (2) on which the license plate number read result (LPN) is based.

4. The control method according to any one of claims 1 to 3 for a road toll system using on-board units (3), from which at least one vehicle shape-specific toll parameter (OC) can be read out via a DSRC radio interface (17, 46), **characterized by** the following steps:
in the recording vehicle (5):
- reading out (22) the toll parameter (OC) of a passing vehicle (2) by means of a DSRC transceiver (11),
- detecting (20) a shape parameter (CL) of the vehicle (2) by means of a sensor (14),
- checking (24) the toll parameter (OC) for consistency with the shape parameter (CL) and, in case of inconsistency,
- transmitting (27) a violation data record (DELR), including the location of the violation (DO) and license plate number read result (LPN) of the vehicle (2), to the violation server (7).

5. The method according to claim 4, **characterized in that** the additional data in the second part (DELR_{B}) contains a recorded image (pic_{CL}) of the vehicle (2) on which the detected shape parameter (CL) is based.

6. The method according to any one of claims 1 to 5, **characterized in that** the connection-oriented transport protocol is TCP and the connectionless transport protocol is UDP.

7. The method according to any one of claims 1 to 6, **characterized in that** the packets (data₀) of the first part (DELR_{A}) have a size of no more than 100 bytes.

8. The method according to any one of claims 1 to 7, **characterized in that** the aforementioned transmission (27, 33) takes place via a satellite connection.

9. The method according to any one of claims 1 to 8, **characterized in that** the speed, and preferably the driving direction, of a passing vehicle (2) are measured in the recording vehicle (5) and the traffic or toll violation is also determined based on these measured values (v).

10. The method according to any one of claims 4 to 9, **characterized in that** the shape parameter (CL) and the toll parameter (OC) are a respective vehicle length or a respective number of vehicle axles.

11. The method according to any one of claims 1 to 10, **characterized in that** the violation data record (DELR) also contains a time stamp (DT), and the violation server (7) only takes violation data records (DELR) into consideration containing time stamps (DT) within a predetermined time period and/or the control vehicle (6) discards violation data records (DELR) containing time stamps (DT) outside a predetermined time period.

12. The method according to any one of claims 1 to 11, **characterized in that** the recording vehicle (5) measures the speed, and preferably the driving direction, of a passing vehicle (2) and adds these to the violation data record (DELR), and based thereon the violation server (7) extrapolates a temporal change of the location of the violation (DO), so as to take this into consideration when checking whether a location of a violation (DO) is within the surroundings (9) of a position (LOC) at a particular time.

## Revendications

1. Procédé pour le contrôle dans un système de péage routier (1) basé sur des unités de bord (3) embarquées par des véhicules (2), utilisant au moins un véhicule de marquage (5) et au moins un véhicule de contrôle (6) capables de communiquer sans fil avec un serveur de délits central (7), comprenant :
dans le véhicule de marquage (5) :
- la détection (20, 22) d'une infraction routière ou de péage d'une unité embarquée (3) ou d'un véhicule (2) transportant celle-ci et, en cas de délit,
- l'envoi (27) d'un ensemble de données de délit (DELR), avec un lieu de délit détecté (DO) et une immatriculation lue (LPN) du véhicule (2), au serveur de délits (7) ;
dans le serveur de délits (7) :
- l'enregistrement (30) de véhicules de contrôle (6) avec des positions (LOC) ou leurs environnements (9),
- la réception (27) d'ensembles de données de délit (DELR) venant de véhicules de marquage (5) et, lorsque leurs lieux de délit (DO) tombent dans l'environnement (9) d'une position (LOC),
- la mise (31-33) de ces ensembles de données de délit (DELR) à la disposition d'un véhicule de contrôle (6) enregistré avec cette position (LOC) ou cet environnement (9) ;
dans le véhicule de contrôle (6) :
- l'enregistrement (29, 30) de sa position (LOC) ou de son environnement (9) dans le serveur de délits (7),
- lecture d'immatriculation (38) sur une plaque d'immatriculation (13) d'un véhicule (2) passant devant,
- la détection (41), pour une immatriculation lue (LPN), d'un ensemble de données de délit (DELR) mis à disposition (33) par le serveur de délits (7) et, lorsqu'un tel ensemble existe,
- émission (44) d'un message d'alerte ;
dans lequel, lors de l'envoi d'un ensemble de données de délit (DELR) par le véhicule de marquage (5) au serveur de délits (7) et/ou par le serveur de délits (7) au véhicule de contrôle (6), l'ensemble de données de délit (DELR) est divisé en deux parties, parmi lesquelles la première partie (DELR_{A}) contient au moins le lieu du délit (DO) et le résultat de la lecture d'immatriculation (LPN), et la deuxième partie (DELR_{B}) contient d'autres données de délit (pic_{LPN}, pic_{CL}) , et la première partie (DELR_{A}) est envoyée par le biais d'un protocole de transport transmis par paquets orienté connexion, et la deuxième partie (DELR_{B}) est envoyée par le biais d'un protocole de transport transmis par paquets sans connexion.

2. Procédé selon la revendication 1, **caractérisé en ce que** les paquets (dataₙ) de la deuxième partie (DELR_{B}) sont numérotés, puis, suite à la réception de plusieurs paquets (dataₙ), ceux-ci sont vérifiés quant à leur intégralité à l'aide de leur numérotation, et les paquets (dataₙ) manquants sont redemandés.

3. Procédé selon la revendication 1 ou 2, **caractérisé en ce que** les autres données dans la deuxième partie (DELR_{B}) contiennent une capture d'image (pic_{LPN}) de la plaque d'immatriculation (13) du véhicule (2), sous-jacente au résultat de lecture d'immatriculation (LPN).

4. Procédé selon l'une des revendications 1 à 3, pour le contrôle d'un système de péage routier avec des unités embarquées (3), à partir desquelles au moins un paramètre de péage (OC) spécifique à la forme du véhicule peut être lu par le biais d'une interface radio DSRC (17, 46), **caractérisé par** :
dans le véhicule de marquage (5) :
- la lecture (22) du paramètre de péage (OC) d'un véhicule (2) passant devant, au moyen d'un émetteur-récepteur DSRC (11),
- la détection (20) d'un paramètre de forme (CL) du véhicule (2) au moyen d'un détecteur (14),
- la vérification (24) du paramètre de péage (OC) quant à la cohérence avec le paramètre de forme (CL) et, en cas d'incohérence,
- l'envoi (27) d'un ensemble de données de délit (DELR), avec un lieu du délit (DO) et un résultat de lecture d'immatriculation (LPN) du véhicule (2), au serveur de délits (7).

5. Procédé selon la revendication 4, **caractérisé en ce que** les autres données dans la deuxième partie (DELR_{B}) contiennent une capture d'image (pic_{CL}) du véhicule (2) sous-jacente au paramètre de forme (CL) détecté.

6. Procédé selon l'une des revendications 1 à 5, **caractérisé en ce que** le protocole de transport orienté connexion est du type TCP et le protocole de transport sans connexion est du type UDP.

7. Procédé selon l'une des revendications 1 à 6, **caractérisé en ce que** les paquets (data₀) de la première partie (DELR_{A}) présentent une taille pas supérieure à 100 octets.

8. Procédé selon l'une des revendications 1 à 7, **caractérisé en ce que** ledit envoi (27, 33) est effectué par le biais d'une connexion par satellite.

9. Procédé selon l'une des revendications 1 à 8, **caractérisé en ce que** dans le véhicule de marquage (5), la vitesse et de préférence la direction d'avancement d'un véhicule (2) passant devant sont mesurées et le délit routier ou de péage est déterminé sur la base de ces valeurs de mesure (v).

10. Procédé selon l'une des revendications 4 à 9, **caractérisé en ce que** le paramètre de forme (CL) et le paramètre de péage (OC) représentent respectivement une longueur de véhicule ou un nombre d'axes.

11. Procédé selon l'une des revendications 1 à 10, **caractérisé en ce que** l'ensemble de données de délit (DELR) contient également un horodatage (DT), et seuls des ensembles de données de délit (DELR) avec un horodatage (DT) dans la limite d'un intervalle de temps prédéfini sont pris en compte dans le serveur de délits (7), et/ou des ensembles de données de délit (DELR) avec un horodatage (DT) tombant en-dehors d'un intervalle de temps prédéfini sont rejetés dans le véhicule de contrôle (6).

12. Procédé selon l'une des revendications 1 à 11, **caractérisé en ce que** dans le véhicule de marquage (5), la vitesse et de préférence la direction d'avancement du véhicule (2) passant devant sont mesurées et intégrées dans l'ensemble de données de délit (DELR), et une modification temporelle du lieu du délit (DO) est extrapolée dans le serveur de délits (7), pour sa prise en compte dans la vérification permettant de savoir si un lieu du délit (DO) tombe dans l'environnement (9) d'une position (LOC) à un moment donné.
